## Europäisches Patentamt
## European Patent Office
## Office européen des brevets

(11) Publication number: **0 242 060**
**B1**

(12) **EUROPEAN PATENT SPECIFICATION**

(45) Date of publication of the patent specification:
**12.09.90**

(51) Int. Cl.⁵: **G01N 29/20**, G01N 29/00,
G01H 17/00

(21) Application number: **87302347.7**

(22) Date of filing: **18.03.87**

(54) Acoustic inspection method for ceramic coatings of catalytic converter monolith substrates.

(30) Priority: **10.04.86 US 850042**
**14.05.86 US 863146**

(43) Date of publication of application:
**21.10.87 Bulletin 87/43**

(45) Publication of the grant of the patent:
**12.09.90 Bulletin 90/37**

(84) Designated Contracting States:
**DE FR GB**

(56) References cited:
**US-A- 4 287 769**
**US-A- 4 480 473**

(73) Proprietor: **GENERAL MOTORS CORPORATION,**
**General Motors Building 3044 West Grand Boulevard,**
**Detroit Michigan 48202(US)**

(72) Inventor: **Varterasian, John H., 29518 Bentley, Livonia**
**Michigan 48154(US)**
Inventor: **Blaser, Dwight Allen, 32362 Hampton Court,**
**Fraser Michigan 48026(US)**

(74) Representative: **Denton, Michael John et al, Patent**
**Section Vauxhall Motors Limited 1st Floor Gideon**
**House 26 Chapel Street, Luton Bedfordshire**
**LU1 2SE(GB)**

ACTORUM AG

## Description

This invention relates to methods of inspecting the ceramic coatings of catalytic converter monolith substrates.

The invention is more particularly concerned with an acoustic method for inspecting the amount of coating, the uniformity of the coating, and whether there is blockage by the coating.

In the manufacture of catalytic converter monoliths, the monolith substrate is normally formed of extruded ceramic material or stacked corrugated metal foil so as to have many passages extending therethrough for exhaust gas flow past a catalyst deposited on the walls of the passages. The many passages form a large surface area within a small cross-sectional envelope that is normally further minimised significantly for both space and material savings by treating the surface with a ceramic wash coat such as alumina so as to form a coating thereon of greatly expanded surface area to serve as the actual base for the noble-metal catalytic material. However, the normal amount of wash coat which is applied reduces the flow area significantly (eg by as much as 25%). An excess amount of wash coat could thus unnecessarily increase the engine back-pressure by a considerable amount, and conversely insufficient wash coat could significantly reduce the long-term effectiveness of the catalytic action.

In the manufacturing process, the objective is accordingly to apply the correct and proper amount of ceramic coating to the monolith substrate passages, namely an amount that permits proper catalytic action without unduly increasing the engine back-pressure.

The proper amount of ceramic coating to apply can be precisely determined, but the problem is to achieve accurate application, which to date, by all methods so far known, can result in a significant number of out-of-tolerance substrates. For example, there may be too much or too little coating, or the passages may be tapered because of non-uniform coating caused by "sagging" or "running" of the coating prior to drying, and/or the coating may have plugged some of the passages.

Since the performance of the converter is highly dependent on the proper amount and distribution of the wash coat, it is necessary to determine whether the desired amount of coating has been applied, and whether it has been applied uniformly along the passages, and also whether any passages have become blocked.

Moreover, it is desirable that the inspection be made rapidly, without loss of accuracy, and that there be 100% inspection available, and also that the method be non-destructive of the monolith substrates as well as not requiring their special clean-up.

Methods currently in use typically involve computation based on coating weight, and measurements based on pressure drop and radio-gauging, and as a result are deficient in various respects.

The present invention is concerned with an acoustic method for inspecting ceramic coatings of catalytic converter monolith substrates which provides for acoustic inspection of such ceramic-coated monolith substrates both rapidly and accurately at the completion of their coating, to ascertain whether the coating was applied properly.

To this end, an acoustic inspection method in accordance with the present invention comprises the steps specified in claim l.

Thus in the acoustic inspection method in accordance with the present invention the principles of a Helmholtz resonator are applied to measure the flow area of a coated monolith substrate, and from the results of this measurement it is inferred whether the coating was applied properly.

The present invention is in fact based on the recognition that the acoustic natural frequency of a Helmholtz resonator is a function of the resonator's physical dimensions as well as several constants, such that by employing the coated monolith substrate as the throat to form such a resonator, it is possible to utilise a simple acoustic inspection method, preferably using a loudspeaker, two microphones and a sound-wave phase angle processor, to infer the flow area of the coated monolith substrate operating as such, and thereby whether the coating has been applied properly to the substrate.

An inspection apparatus for carrying out the method in accordance with the present invention will include an acoustically sealed structure with the speaker at one end, an empty resonator cavity at an opposite end, and a connecting passage therebetween in which is mounted the coated monolith substrate that is to be inspected. The speaker will be driven to direct a continuous low-frequency sound wave through the coated passages into the resonator cavity.

This apparatus forms in effect a Helmholtz resonator that responds similarly to a spring-mass-damper system, and has a resonant (natural) frequency at which large oscillatory air motions will occur through the coated monolith substrate. With the coated monolith substrate used as the throat, the natural frequency, $f_n$, of the acoustic system is directly related to the existing flow area of the coated passages in accordance with the equation:

$$f_n = \left( c/2\pi \right) \cdot \sqrt{A_m/VL_m} \qquad (1)$$

where
$c$ = speed of sound,

A $_m$ = total area of monolith substrate passages,

L $_m$ = effective length of monolith substrate, and

V = volume of resonator cavity.

Since the length of each coated monolith substrate, the volume of the resonator cavity, and the speed of sound all remain fixed, the natural frequency is thus proportional to the square root of the flow area of the monolith substrate, that is:

$$f_n \propto \sqrt{A_m}. \tag{2}$$

The available flow area can thus be determined by varying the excitation frequency applied to the speaker until peak sound pressure occurs in the cavity as monitored by the one microphone therein, with the coated monolith substrate incorporated as the throat of the Helmholtz resonator thereby formed. The flow area thus determined can then be used to infer the amount of coating which has been applied, based on the known effect which the thickness of the coating has on the flow area.

Furthermore, it is possible to identify the natural frequency by measuring the phase angle between the signals received by the two microphones located at the opposite ends of the substrate, and from this, by reference to a substrate known to be properly coated, to achieve an even greater range and degree of inspection, in a manner well suited for fully automatic on-line inspection in production.

In this, the most preferred procedure in conformity with the present invention, the two microphones are used to monitor the acoustic pressure at both ends of the coated monolith substrate, and the resulting signals are processed to determine phase angle information from which the actual area of the substrate is inferred.

A further useful feature of phase angle comparison has been found to be that the uniformity of the coating can be determined by simply reversing the mounting of the substrate and repeating the phase-angle inspection step, as will be further discussed later.

In addition, a go and no-go type of inspection may be implemented with the phase angle signals and processor, to permit inspection to be effected within a very short time, such as a few seconds, and to a very fine degree, for example to detect flow area deviations as small as l%. Such inspection can be based on detecting improper coating by the occurrence of a certain difference in phase angle from a fixed reference, so avoiding the need for human operator judgement, whereby for automated production the method of the present invention can be used in an unattended factory to give l00% on-line inspection.

US-A-4 480 473 discloses an acoustic inspection method for determining the length of the fluid-flow path through an evaporator core or like manufactured fluid-flow system, involving passing a test sound wave of predetermined frequency along the actual fluid-flow path through the system and comparing the phase angle of the test sound wave at the exit of the actual flow path with that of a reference sound wave of the same frequency passing along the exactly prescribed fluid-flow path length, on the basis that a difference in phase angle indicates that the fluid-flow path being inspected is not of the prescribed length.

In the drawings:

Figure l is an exploded view of a catalytic converter having a monolith whose substrate has a ceramic coating to be inspected by the acoustic inspection method of the present invention;

Figure 2 is a cross-sectional view on the line 2--2 of Figure l, in the direction of the arrows;

Figure 3 is a block diagram of apparatus for implementing the acoustic inspection method of the present invention, for inspection of the the coated monolith substrate of Figure l;

Figure 4 is a graph showing phase angle plotted as a function of frequency from signals obtained from microphones in the apparatus of Figure 3, respectively from the inspection of a coated monolith substrate with the proper coating, from the inspection of a coated monolith substrate with a heavy coating, and from the inspection of a coated monolith substrate with a light coating; and

Figure 5 is a graph showing DC output voltage plotted as a function of phase angle for a correlator/synchronous demodulator in the apparatus of Figure 3.

With reference now to the drawings, wherein like reference numbers denote like or corresponding parts throughout the several views, there is shown in Figures l and 2 a catalytic converter l0 of the monolith type used in a motor vehicle to eliminate the undesirable constituents in internal combustion engine exhaust gases. The converter shown is like that disclosed in US-A-4 559 205.

Specifically, in relation to those parts of the catalytic converter l0 likely to be particularly helpful to an understanding of the present invention, the converter includes a two-piece sheet metal housing l2 enclosing a monolith l4 formed of a metal substrate coated with a ceramic wash coat of alumina and then with a suitable catalyst. The metal substrate is formed of plain and corrugated metal foil sheets l6 and l8 that are retained together by means of a two-piece sheet metal canister 20 to form a sub-assembly 22 for the application of the ceramic coating and catalyst and for mounting in the converter housing.

An annular seal 24 formed of intumescent material provides sealing between the exterior of the canister 20 and the interior of the housing l2, and the monolith-forming sheets are arranged and configured so as to define many passages 26 of the resulting extensive catalyst-treated surface area interconnecting the converter's inlet 28 and outlet 30.

The acoustic inspection method of the present invention, although disclosed in relation to inspection of the above metal monolith substrate, is, as will become readily apparent, also applicable to the inspection of other forms of monolith substrate, such as an extruded ceramic substrate to which a ceramic wash coat is similarly applied to increase the effective surface area.

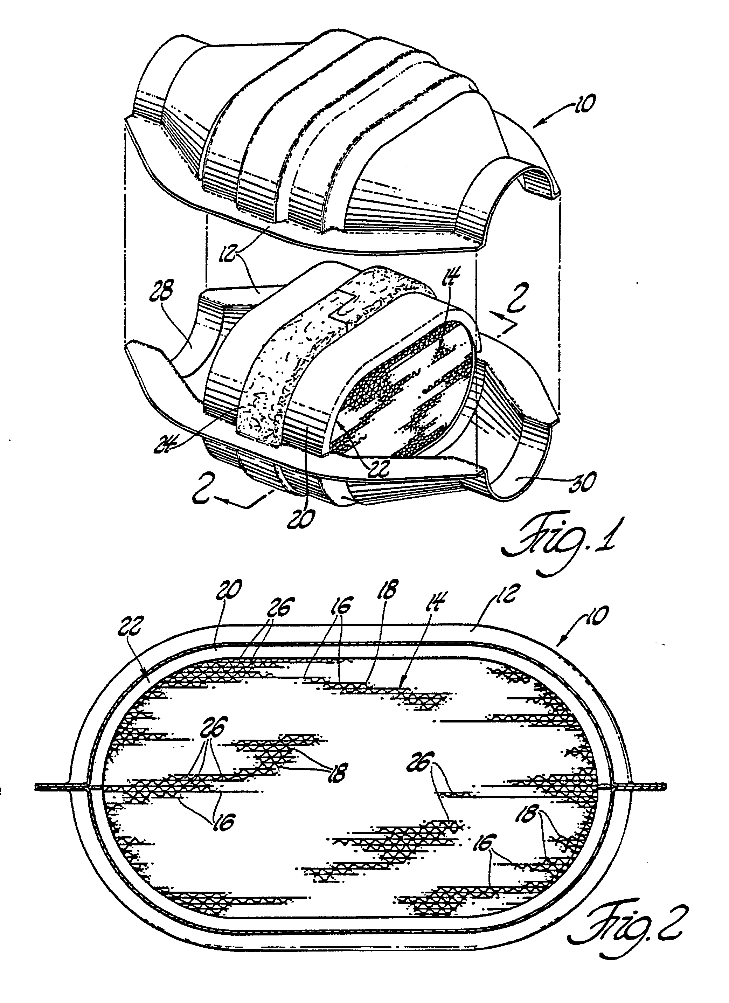

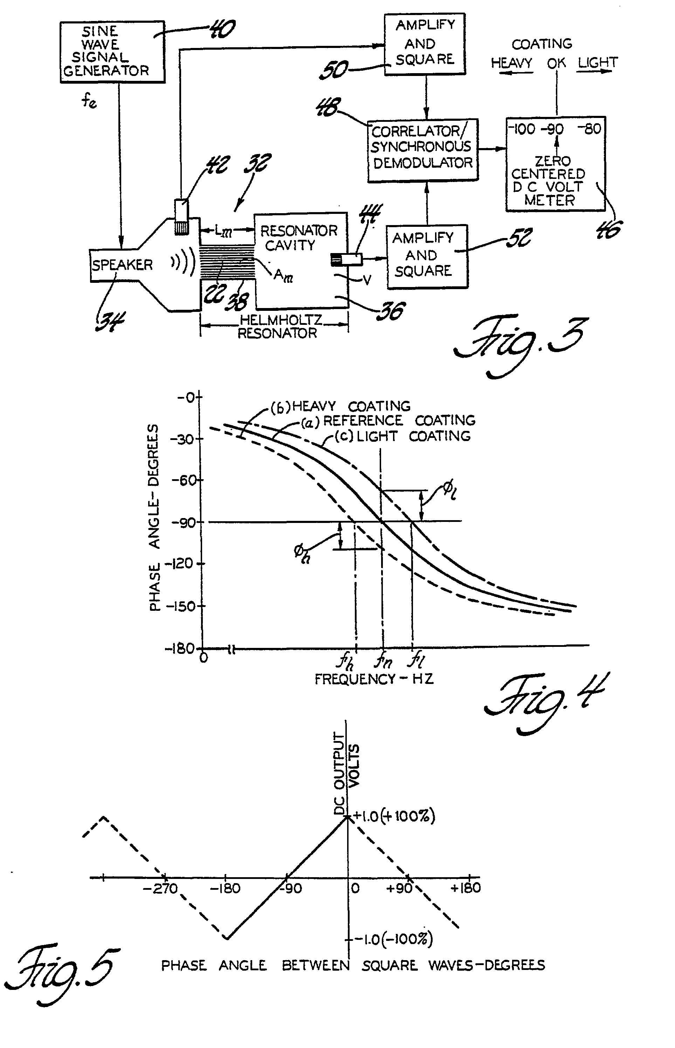

Figure 3 shows apparatus for acoustically inspecting such monolith substrates as to the amount and uniformity of the ceramic wash coat or the like applied thereto, and as to whether there is blockage of some of the passages therein by reason of such coating. The apparatus comprises an acoustically sealed structure 32 with a loudspeaker 34 at one end, an empty cavity forming a resonator chamber 36 at an opposite end, and a connecting throat section 38 in the central region wherein the coated monolith substrates that are to be inspected can readily be mounted one at a time.

A conventional sine wave generator 40 is operable to drive the speaker 34 to produce a continuous low-frequency (eg less than l65 Hz) acoustic wave that travels through the passages of the substrate into the resonator chamber. As noted in Figure 3, this forms a Helmholtz resonator that responds similarly to a spring-mass-damper system and has a resonant (natural) frequency at which large oscillatory air motions will occur through the coated monolith substrate being inspected. These oscillatory air motions are monitored by two microphones 42 and 44 that are located respectively in the sealed structure at the face of the speaker 34 and in the resonator cavity, to thereby sense the acoustic pressure at both ends (that is, the entrance end and the exit end) of the coated monolith substrate. The resulting signals are processed to provide phase angle information that is used to infer the flow area, and from that information to infer whether the coating was applied properly, as will now be described in detail with reference to the most preferred manner of practising the invention.

As already indicated, the acoustic method of the present invention is based on the fact that the acoustic natural frequency of a Helmholtz resonator is a function of the resonator's physical dimensions $A_m$, $L_m$ and $V$ (see Figure 3, and these variables having the meanings already assigned to them), and on the recognition that by making the coated monolith substrate the throat of such a resonator, the natural frequency $f_n$ of the resonator is thus related directly to the substrate's flow area in accordance with the above Equation (l), and in particular is thus made proportional to the square root thereof, in accordance with the above Equation (2).

As a result, the flow area can be determined by varying the excitation frequency to the speaker until peak sound pressure occurs in the resonator cavity, with the coated monolith substrate serving as the throat. From this determination of the flow area, it is also possible to infer the amount of ceramic coating, as will be demonstrated with respect to the most-preferred method utilising measurement of the phase angle, which also provides additional advantages.

The natural frequency of the Helmholtz resonator structured in this manner with the use of a coated monolith substrate as the throat can also be identified by measuring the phase angle between the signals of the two microphones disposed at the entrance and exit respectively of the passages in the coated substrate. For instance, at the resonant (natural) frequency, the phase angle of the signal from the output microphone 44 is -90° out-of-phase (90° phase lag) with the signal from the input microphone 42. This is shown by the curve (a) in Figure 4, in which Figure the phase angle is plotted as a function of frequency, the curve (a) relating to the use of a properly coated ("reference") monolith substrate as the resonator throat element.

In addition to having a -90° phase angle at the natural frequency, the phase response curve has a finite and maximum slope at the natural frequency $f_n$ of the acoustic system. This slope is a function of the acoustic damping that results because of the radiation of sound into the regions surrounding the coated monolith substrate, and also viscous losses associated with the movement of fluid (air) through the narrow passages of the substrate. It is this slope of the curve at the natural frequency that determines the maximum sensitivity (gain) of the above inspection system, that is, the amount of phase angle change per unit change of flow area.

With smaller passages, the acoustical damping increases, and the absolute value of the slope (gain) decreases. Conversely, with larger passages, the acoustical damping decreases, and the absolute value of the slope (gain) increases. Very high sensitivity (gain) also occurs when there is only very little damping, but this is to be avoided because of the non-linear or erratic output that could result.

By the use of the apparatus shown in Figure 3, and with the Helmholtz resonator phase angle characteristics corresponding to those of a reference coated monolith substrate shown by the curve (a) in Figure 4, flow area inspection with maximum sensitivity is obtained as follows. First, the speaker excitation frequency, $f_e$, is adjusted (tuned) to produce a -90° phase angle (ie corresponding to the condition $f_e=f_n$) with a properly coated reference monolith substrate operating as the resonator throat. This frequency is then held constant while other substrates, following their coating in the manufacturing process and prior to final assembly, are successively substituted for the reference coated substrate as the resonator throat.

The phase angles resulting from these succeeding units are then used as a measure of the flow areas of those units relative to the reference unit. This is shown in Figure 4, in which phase angle characteristics found for monolith substrates with a lesser flow area, and thus having a heavy or thick coating, are indicated by curve (b), whereas those with a greater flow area, and thus having a light or thin coating, are indicated by curve (c).

Inspection of these curves shows that the curves (b) and (c) are substantially identical in shape to the reference curve (a), but are shifted to the left and right respectively of the reference curve. In the case of the curve (b), the shift to the left occurred because the heavier coating reduced the flow area, which in turn lowered the resulting natural frequency, $f_h$, of the Helmholtz resonator then in effect, in accordance with Equation (2). Therefore, with an initial excitation frequency of $f_e = f_n$, the phase angle resulting from a heavily coated monolith is $-(90° + \phi_h)$, as shown. Conversely, for a monolith substrate having only a light coating, the resulting natural frequency, $f_1$, is greater than $f_n$, and the corresponding phase angle is $-(90°-\phi_1)$.

In general, the phase angles $\phi_h$ and $\phi_1$ will in practice correspond to the normal extremes of wash-coat thickness variations, and may for example both be about 10°. Therefore, all other coated monolith substrates in this group will produce phase angles within the band -90° ± 10°. However, properly coated monoliths will produce phase angles within a smaller tolerance band, such for instance as -90° ±. Any substrate within this group that produces a phase angle outside the ≡ band will therefore be inferred to have either too heavy or too light a coating, and thus to be unacceptable as being out of the prescribed tolerance range. As a result, a phase meter that is calibrated with -90° at its centre, and -100° and -80° respectively at its left-hand and right-hand ends, can be used to measure and inspect whether the proper coating has been applied. This phase meter may thus comprise simply a zero-centred DC voltmeter 46, as shown in Figure 3, that receives the output of a correlator/synchronous demodulator 48 to which the sine-wave signals from the microphones 42 and 44 are delivered by way of amplifying and squaring circuits 50 and 52, as will be described in greater detail later.

After the system has been calibrated by inserting a reference substrate and adjusting the value of $f_e = f_n$, a phase angle of -90° (including ± 3° tolerance for instance) obtained from a substrate under inspection indicates that the proper amount of wash coat has been applied, or that there is only minimal blockage of the passages by the coating. On the other hand, a phase angle whose absolute value is out of the tolera nce band indicates an improper amount of coating, or too much blockage. Moreover, the phase angle as monitored by the phase meter, in addition to indicating whether the coating is unacceptable, also indicates the extent to which it is unacceptable, as having either too heavy or too light a coating.

Inspection of the wash-coat thickness for uniformity along the length of the substrate passages is achieved by inspecting the flow area in both directions. This procedure is based on the recognition that, if there is non-uniformity in coating thickness, the indicated phase angles will be different depending on the direction in which the substrate is oriented in the resonator during the inspection. This is because the indicated phase angle has been found to be more sensitive to the entrance flow area near the speaker than to the exit flow area near the resonator cavity. In other words, when the end of a substrate having a slightly lower flow area, such as results from sagging or running of the coating prior to drying, is disposed adjacent the speaker, the absolute value of indicated phase angle is greater than when the unit is reversed (that is, turned round). Accordingly, when the phase angles observed for both directions of orientation are the same, it can be inferred that the substrate is uniformly coated. Conversely, when these phase angles differ, it can be inferred that the coating is non-uniform or tapered along the length of the substrate.

The most preferred read-out of phase angle for the acoustic inspection method is obtained by the use of the signal processing stages shown in Figure 3. With this arrangement, the acoustic activity at each end of the Helmholtz resonator is monitored by the two microphones 42 and 44, the sine-wave outputs of which are amplified and squared by the respective circuits 50 and 52 of conventional layout. This operation preserves the phase relationship of the sine waves, and results in the production of square waves having fixed amplitudes. Thus regardless of the amplitudes of the acoustic pressure signals, the amplitudes of the square waves will remain fixed. As a result, the system is essentially insensitive to amplitude changes that might occur due to temperature changes, ageing and other "noise"-type inputs, and responds only to the relevant phase variations resulting from differences in the flow areas.

The square waves are input to the correlator/synchronous demodulator 48, which is a unit like the arrangement for a similar processing purpose disclosed in US-A-4 480 473 (see Figure 6). As is shown in Figure 5 of the present drawings, the output of this stage is a DC analog voltage that varies linearly (within 180° bands) in accordance with the difference in phase angle between the square waves. That is, when the signals are in phase, $\phi = 0°$ (+100% positive correlation), and the DC voltage is at its maximum positive value (for instance +1 volt). As $\phi$ decreases, the voltage likewise decreases, as shown by the solid line in Figure 5. At $\phi = -90°$ (no correlation), the correlator output is 0 volts. Then as $\phi$ approaches -180° (-100% negative correlation), the output is -1 volt. As can be seen, a linear relationship exists between $\phi$ and DC voltage within the range in which $-180° \leq_{\alpha\mu\rho} \phi \leq_{\alpha\mu\rho} 0°$, and that on both sides of this range the function repeats itself, as shown by the dashed portion thereof.

Only the solid portion of the curve in Figure 5 is relevant to the inspection. As such, when the DC voltage from the correlator 48 inputs to the zero-centred DC voltmeter 46, this instrument functions as a phase meter in the practice of the inspection method. That is, the centre of the meter indicates -90°,

whereas the left-hand and right-hand ends indicate angles that are proportional to, respectively, the heaviest and the lightest expected coatings, for instance angles of -l00° and -80° as shown in Figure 3 for the case in which $\phi_h = \phi_l = l0°$, as a entioned. These end points are determined experimentally for each different type of monolith, which may have either a metal or a ceramic substrate, and they should be in the linear range, corresponding to the solid line in Figure 5.

The meter system, in conjunction with the Helmholtz resonator having a coated monolith substrate specimen as the throat, thus results in an acoustic phase angle measurement proportional to the flow area of this substrate specimen, and therefore a measure of the amount of coating thereon.

The above inspection method can fundamentally operate at any excitation frequency, but for at least two reasons it is preferred that the system be calibrated by tuning such frequency to, or substantially to, the resonant frequency of the Helmholtz resonator. Firstly, such an approach results in very nearly maximum sensitivity to flow blockage when $\phi_h$ and $\phi_l$ are nearly equal. In other words, the greatest difference between the curves (b) and (c) in Figure 4 occurs in the frequency range near the value $f_n$. Secondly, this frequency value $f_n$ is a well-defined frequency, producing a -90° phase angle with a properly coated reference substrate, thereby making calibration easy and consistent.

On the other hand, if circumstances should change in the manufacturing process such that $\phi_h$ and $\phi_l$ were not similar in magnitude, then the initial tuning strategy could be revised to maintain a high sensitivity. For example, if lighter than normal coatings were no longer a possibility in the manufacturing process, then the initial excitation or tuning frequency could be offset to a value less than the value $f_n$. More specifically, in such a case the maximum sensitivity is obtained with the excitation frequency equal to the geometric mean of $f_n$ and $f_h$, as given by the equation:

$$ f_e = \sqrt{f_n f_h}. \tag{3} $$

This criterion ensures that the difference between the two phase responses is maximised for the inspection of the coated substrates. It assumes, however, that the acoustic damping (that is, the slope of the curve) for both substrates is the same, which is usually a good approximation. Similarly, if only substrates with lighter coating are of concern (when heavy coatings are not a possibility because of the manufacturing process), the tuning or excitation frequency for maximum sensitivity is equal to the geometric mean of $f_n$ and $f_l$, as given by the equation:

$$ f_e = \sqrt{f_n f_l} \tag{4} $$

Again, the small changes in substrate acoustic damping are considered negligible.

The sensitivity (gain) of the system will be defined as the phase angle change for a l% change in the flow area, and depends primarily on the slope of the phase angle response curve at the natural frequency. Accordingly, the sensitivity is a function of the physical dimensions and configuration of the substrate, and theoretically would be different for each substrate shape and passage geometry. In respect of the sensitivity of the system to the oval-shaped substrate shown, and recalling that the Helmholtz resonator is analogous to a second-order mechanical system and thus can be modelled as a mass, a spring and a damper, the phase angle angle response curves can therefore be described by means of the expression used for the phase angle between displacement and force in a mechanical system. This is given by the equation:

$$ \phi = -\tan^{-1} \left\{ \frac{2\zeta (f_e)/(f_n)}{[1-(f_e/f_n)^2]} \right\}. \tag{5} $$

In Equation (5), $f_e$ is the excitation frequency, $f_n$ is the system's natural frequency, and $\zeta$ is the acoustic damping factor. It will be noted that $\zeta$ can be determined from the phase angle response curve, using the relationship:

$$ \zeta = \pi f_n \frac{180}{\left(\dfrac{\Delta\phi}{\Delta f}\right)} \tag{6} $$

where $\Delta\phi/\Delta f$ is the slope of the response curve at the natural frequency.

For example, it was noted for a certain reference substrate having a normal and uniform coating that:

$f_n = l40.6\,Hz, \quad (7)$

and:

$\Delta\phi/\Delta f = 2.085°/Hz, \quad (8)$

6

and that therefore:

$\zeta = 0.195$.  (9)

With this parameter, it is possible to calculate the phase angle of the inspection system with a test substrate having a flow area different from that of the reference substrate, and therefore to determine the sensitivity of the inspection system. This calculation is based on the condition that the excitation frequency, $f_e$, is initially tuned to be equal to $f_r$, the natural frequency corresponding to the reference substrate.

Accordingly, from Equation (5):

$$\phi_t = -\tan^{-1} \left\{ \frac{2\zeta \, (f_t/f_t)}{[1 - (f_r/f_t)^2]} \right\}, \qquad (10)$$

where $f_t$ is the natural frequency corresponding to the test substrate.

Then from Equation (2):

$$f_r/f_t = \sqrt{A_r/A_t} = 1/\sqrt{R}, \qquad (11)$$

where $A_r$ is the flow area corresponding to the reference substrate, $A_t$ is the flow area of the test substrate, and R is the ratio of the flow areas and is equal to $A_t/A_r$.

By substituting Equation (11) into (10):

$$\phi_t = \left[ -\tan^{-1} . 2\zeta \, \sqrt{R}/(R-1) \right]. \qquad (12)$$

As a result, Equation (12) describes the phase angle of any test substrate in the inspection system in terms of the ratio of the flow areas.

For instance, in the above example an increase of 1% in the flow area (R = 1.01) would result in a phase angle of -88.5°, or a change in phase angle of 1.5°. Therefore the sensitivity for a uniform change of flow area is 1.5°/1%.

However, the sensitivity for a non-uniform change of area that results when only a few passages are blocked has been found to be nearly one-half of the uniform value. In addition, the sensitivity for a discrete blockage was found to depend somewhat on the actual location of the blockage.

Moreover, Equation (12) can be used to show that the inspection system's phase angle limits such as those given above as -80° and -100° correspond to an area increase of 7.1% and an area decrease of 6.6% respectively.

In the description thus far, it has been assumed that the speed of sound is the same during each inspection. However, the speed of sound does vary with temperature, and this will therefore affect the relationship between the acoustic phase angle and the flow area of the substrate. In this situation, the speed of sound in air varies as the square root of the absolute temperature, as given by the equation:

$$c = c_o \sqrt{1 + T/273} \qquad (13)$$

where

$c_o$ = speed of sound at 0°C = 331.1 m/s,
and
$T$ = temperature, °C.

From Equation (1), therefore, the natural frequency of the Helmholtz resonator and the resulting phase angles used in the present method also vary with temperature. Accordingly, for consistent inspection results, the system needs to be recalibrated to compensate for any substantial temperature change, as will now be demonstrated.

By substituting Equation (13) into Equation (1), the natural frequency of a Helmholtz resonator at a temperature T is given by the equation:

$$f_n = c_o/2\pi \sqrt{(1 + T/273)(A_m/VL_m)}. \qquad (14)$$

Therefore, the ratio of the natural frequencies for air temperatures $T_1$ and $T_2$ respectively is given by the equation:

$$f_1/f_2 = \sqrt{(273 + T_1)/(273 + T_2)}. \qquad (15)$$

7

In Equation (l5), $f_1$ corresponds to the natural frequency of a coated substrate at temperature $T_1$, whereas $f_2$ corresponds to the natural frequency of the same substrate at temperature $T_2$.

For instance, for a reference substrate having an oval cross-section as shown and for which the natural frequency was found to be l38.9 Hz at a temperature of 22°C, the resulting natural frequency at any other temperature, T, is given by the equation:

$$f_n = 8.1 \sqrt{273 + T}, \qquad (16)$$

and the natural frequency sensitivity to temperature is given by the equation:

$\Delta f_n/\Delta T = 0.235$ Hz/°C.  (l7)

When measured values of natural frequency versus temperature for this reference substrate were compared with the theoretical, it was found that there was good actual correlation for these values.

With such correlation found, the phase angle for this reference substrate as a function of temperature is then obtained by substituting Equation (l5) into Equation (5), with the reference damping factor $\zeta = 0.l95$. As a result:

$$\phi = -\tan^{-1}[6.7\sqrt{(273 + T)/(T- 22)}], \qquad (18)$$

and the phase angle sensitivity to temperature given by the derivative is:

$\Delta\phi/\Delta T = 0.498$ °/°C .  (l9)

Thus the combined effects of excitation frequency and temperature on phase angle can be predicted and compensated for accordingly.

For instance, when the above-described system was initially calibrated with $\phi = -90°$, using a substrate with a normal and uniform coating as the reference, the excitation frequency was l38.9 Hz with the temperature at 22°C. However, if the temperature were to increase for example to 25°C, the resulting phase angle would change to -88.5°, according to Equation (l9). As a result, for consistent inspection results, it would be necessary to recalibrate the system by increasing the excitation frequency to l39.6 Hz, at which the phase angle is again -90°.

The temperature of the reference substrate should of course itself be representative of the temperature of the substrates being inspected.

## Claims

l. An acoustic inspection method for determining, in a catalytic converter monolith substrate, whether a ceramic coating has been applied in a predetermined amount to the surface of exhaust gas passages extending therethrough, and whether the ceramic coating is blocking any of the passages, comprising the steps of:

a) mounting a catalytic converter monolith substrate (22) with ceramic-coated exhaust gas passages extending therethrough in an acoustically sealed structure (32) so as to form a throat (38) communicating a loudspeaker (34) at an entrance end of the coated passages with an empty resonator cavity (36) at an exit end of the coated passages and thereby form a Helmholtz resonator,

b) driving the speaker (34) to produce a continuous sound wave through the coated passages into the resonator cavity (36) at a predetermined frequency and thereby produce oscillatory sound waves through the coated passages at the same frequency,

c) comparing the phase angles (42,44,48,50,52) of the sound waves at the entrance and exit ends of the coated substrate passages with respect to those of a reference sound wave of the same frequency passed in like manner through a reference substrate known to have the desired quantity of coating on the passages and no blockage, and

d) detecting whether or not the passages of the substrate (22) being inspected have the prescribed quantity of coating and any blockage, on the basis that the occurrence of a prescribed difference in the phase angles (42,44,48,50,52) implies a deviation in the total flow area of the passages and thereby a deviation from the desired quantity of coating on the passages and lack of blockage thereof.

2. An acoustic inspection method according to claim l, characterised in that the predetermined frequency at which the speaker (34) is driven is substantially the natural frequency of the resonator.

3. An acoustic inspection method according to claim l or 2, characterised by, for determining whether the ceramic coating has been applied uniformly to the surface of the exhaust gas passages, the following additional steps:

e) subsequent to step b), reversing the mounting of the substrate (22) so that the entrance end of the substrate (22) is then near the resonator cavity (36) and the exit end is near the speaker (34),

f) repeating step b); and instead of steps c) and d):

g) comparing the phase angles (42,44,48,50,52) of the sound waves at the entrance and exit ends of the coated substrate passages with respect to those of a reference sound wave of the same frequency passed in like manner through a reference substrate known to have the desired quantity and uni-

EP 0 242 060 B1

formity of coating on the passages and no blockage, and

h) detecting whether or not the passages of the substrate (22) being inspected have the prescribed uniformity of coating, on the basis that a prescribed difference in the phase angles following reversal of the substrate mounting implies a deviation in the total flow areas at the entrance and exit ends and thereby a deviation from the desired uniformity of coating along the length of the passages.

4. An acoustic inspection method according to claim l or 2, characterised in that, for determining in the catalytic converter monolith substrate whether the ceramic coating has been applied in a predetermined amount and uniformly to the surface of the exhaust gas passages extending therethrough and whether the ceramic coating is blocking any of the passages:

subsequent to step b) the mounting of the substrate is reversed so that the entrance end is then near the resonator cavity and the exit end is near the speaker, step b) is then repeated,

in step c) the comparison of the phase angles of the sound waves at the entrance and exit ends of the coated substrate passages is effected with respect to those of a reference sound wave of the same frequency passed in like manner through a reference substrate known to have the desired quantity and uniformity of coating on the passages and no blockage, and

step d) comprises detecting whether or not the passages of the substrate (22) being inspected have the prescribed quantity and uniformity of coating and any blockage, on the basis that the occurrence of a prescribed difference in the phase angles (42,44,48,50,52) without reversal of the substrate mounting implies a deviation in the total flow area of the passages and thereby a deviation from the desired quantity of coating on the passages and lack of blockage thereof, and that the occurrence of a prescribed difference in the phase angles (42,44,48,50,52) with reversal of the substrate mounting implies a deviation in the total flow areas at the entrance and exit ends and thereby a deviation from the desired uniformity of coating along the length of the passages.

**Revendications**

1. Procédé de contrôle acoustique utilisé pour déterminer, dans un substrat de monolithe de convertisseur catalytique, si un revêtement céramique a été déposé dans une quantité prédéterminée sur la surface des passages de gaz d'échappement qui le traversent, et si le revêtement céramique bouche des passages, comprenant les phases consistant à:

(a) monter un substrat de monolithe de convertisseur catalytique (22) présentant des passages de gaz d'échappement revêtus de céramique qui le traversent, dans une structure acoustiquement fermée (32) de manière à former un col (38) qui communique avec un haut-parleur (34) à une extrémité d'entrée des passages revêtus et avec une cavité de résonateur vide (36) à une extrémité de sortie des passages revêtus, et à former de cette façon un résonateur de Helmholtz,

(b) exciter le haut-parleur (34) pour produire une onde sonore continue à travers les passages revêtus et dans la cavité du résonateur (36) à une fréquence prédéterminée, et pour produire de cette façon des ondes sonores oscillantes à travers les passages revêtus à la même fréquence,

(c) comparer les angles de phase (42, 44, 48, 50, 52) des ondes sonores observés aux extrémités d'entrée et de sortie des passages revêtus du substrat à ceux d'une onde sonore de référence de la même fréquence qu'on a fait passer de la même façon à travers un substrat de référence connu pour présenter la quantité désirée de revêtement sur les passages et pour ne pas comporter de passages bouchés,

(d) détecter si les passages du substrat (22) qui sont contrôlés portent ou ne portent pas la quantité prescrite de revêtement et présentent ou ne présentent pas de colmatage, sur la base du fait que l'apparition d'une différence prescrite dans les angles de phase (42, 44, 48, 50, 52) est le signe d'un écart sur l'aire de section d'écoulement totale des passages et, par conséquent, d'un écart par rapport à la quantité désirée de revêtement sur les passages et à l'absence de colmatage des passages.

2. Procédé de contrôle acoustique selon la revendication 1, caractérisé en ce que la fréquence prédéterminée à laquelle le haut-parleur (34) est excité est sensiblement la fréquence naturelle du résonateur.

3. Procédé de contrôle acoustique selon la revendication 1 ou 2, caractérisé en ce que, pour déterminer si le revêtement céramique a été appliqué uniformément sur la surface des passages de gaz d'échappement, il comprend les phases additionnelles suivantes:

(e) à la suite de la phase (b), inverser le montage du substrat (22) de manière que l'extrémité d'entrée du substrat (22) soit alors proche de la cavité (36) du résonateur et que l'extrémité de sortie soit proche du haut-parleur (34),

(f) répéter la phase (b); et en remplacement des phases (c) et (d):

(g) comparer les angles de phase (42, 44, 48, 50, 52) des ondes sonores observés aux extrémités d'entrée et de sortie des passages revêtus du substrat à ceux d'une onde sonore de référence possédant la même fréquence et qu'on fait passer de la même façon à travers un substrat de référence qui est connu pour présenter la quantité et l'uniformité désirées de revêtement sur les passages et ne pas comporter de colmatage, et

(h) détecter si les passages du substrat (22) que l'on contrôle présentent ou ne présentent pas l'uniformité de revêtement prescrite, sur la base du fait qu'une différence prescrite dans les angles de phase après l'inversion du montage du substrat est le signe d'un écart sur les aires de section d'écoulement totales aux extrémités d'entrée et de sortie et, par conséquent, d'un écart par rapport à l'uniformité désirée de revêtement sur la longueur des passages.

4. Procédé de contrôle acoustique selon la revendication 1 ou 2, caractérisé en ce que, pour déterminer, dans le substrat de monolithe de convertisseur catalytique, si le revêtement céramique a été déposé dans une quantité prédéterminée et uniformément sur la surface des passages de gaz d'échappement qui le traversent, et si le revêtement céramique bouche des passages ou n'en bouche pas: à la suite de la phase (b), on inverse le montage du substrat de manière que l'extrémité d'entrée soit alors proche de la cavité du résonateur et l'extrémité de sortie proche du haut-parleur; on répète ensuite la phase (b), dans le phase (c), la comparaison des angles de phase des ondes sonores observés aux extrémités d'entrée et de sortie de passages revêtus du substrat s'effectue par rapport à ceux d'une onde sonore de référence possédant la même fréquence et qu'on fait passer de la même façon à travers un substrat de référence connu pour présenter la quantité et l'uniformité désirées de revêtement sur les passages et aucun colmatage, et dans le phase (d), on détecte si les passages du substrat (22) que l'on contrôle présentent ou ne présentent pas la quantité et l'uniformité prescretes de revêtement et présentent ou ne présentent pas un colmatage, sur la base du fait que la présence d'une différence prescrite dans les angles de phase (42, 44, 48, 50, 52) sans inversion du montage du substrat est le signe d'une variation de l'aire de section d'écoulement totale des passages et, par conséquent, d'un écart par rapport à la quantité désirée de revêtement sur les passages et par rapport à l'absence de colmatage des passages, et sur la base du fait que la présence d'une différence prescrite dans les angles de phase (42, 44, 48, 50, 52) à la suite de l'inversion du montage du substrat est le signe d'un écart dans les aires de section d'écoulement totales aux extrémités d'entrée et de sortie et, par conséquent, d'un écart par rapport à l'uniformité désirée du revêtement sur la longueur des passages.

**Patentansprüche**

1. Akustisches Untersuchungsverfahren, um bei einem Katalysatorwandler-Monolitsubstrat zu bestimmen, ob eine Keramikbeschichtung in einem vorgeschriebenen Ausmaß auf die Oberfläche der sich hindurcherstreckenden Abgas-Durchlässe aufgebracht wurde, und ob die Keramikbeschichtung irgendwelche Durchlässe blockiert; bei dem:

a) ein Katalysatorwandler-Monolitsubstrat (22) mit sich hindurcherstreckenden und mit Keramik beschichteten Abgasdurchlässen in einer akustisch abgedichteten Struktur (32) so angebracht wird, daß eine Engstelle (38) zur Verbindung eines Lautsprechers (34) an einem Eingangsende der beschichteten Durchlässe mit einem leeren Resonatorhohlraum (36) an einem Austrittsende der beschichteten Durchlässe gebildet und dadurch ein Helmholtz-Resonator gebildet wird,

b) der Lautsprecher (34) zur Erzeugung einer kontinuierlichen Schallwelle durch die beschichteten Durchlässe in den Resonatorhohlraum (36) mit einer vorbestimmten Frequenz angesteuert wird, um dadurch Schwingungs-Schallwellen durch die beschichteten Hohlräume mit der gleichen Frequenz zu erzeugen,

c) daß die Phasenwinkel (42, 44, 48, 50, 52) der Schallwellen an den Eingangs- und Ausgangs-Enden der beschichteten Substratdurchlässe mit denen einer Referenzschallwelle der gleichen Frequenz verglichen werden, die in gleicher Weise durch ein Referenzsubstrat hindurchgeleitet wird, von dem bekannt ist, daß es die gewünschte Beschichtungsmenge an den Durchlässen besitzt und daß keine Blockierung vorhanden ist, und

d) daß erfaßt wird, ob die Durchlässe des zu untersuchenden Substrats (22) die vorgeschriebene Beschichtungsmenge besitzen und irgendwelche Blockierung vorhanden ist, auf Grund der Tatsache, daß das Auftreten eines vorgeschriebenen Unterschiedes der Phasenwinkel (42, 44, 48, 50, 52), eine Abweichung der Gesamtdurchflußfläche anzeigt und dadurch eine Abweichung von einer erwünschten Beschichtungsmenge an den Durchlässen, und ein Fehlen ihrer Blockierung.

2. Akustisches Untersuchungsverfahren nach Anspruch 1, dadurch gekennzeichnet, daß die vorbestimmte Frequenz, mit der der Lautsprecher (34) angesteuert wird, im wesentlichen die Eigenfrequenz des Resonators ist.

3. Akustisches Untersuchungsverfahren nach Anspruch 1 oder 2, dadurch gekennzeichnet, daß zur Bestimmung, ob die keramische Beschichtung gleichmäßig auf die Fläche der Abgasdurchlässe aufgebracht ist, zusätzlich:

e) nach Schritt b) die Anbringung des Substrats (22) so umgekehrt wird, daß das Eingangsende des Substrats (22) bei dem Resonatorhohlraum (36) und das Ausgangsende bei dem Lautsprecher ist,

f) der Schritt b) wiederholt wird, und statt der Schritte c) und d):

g) die Phasenwinkel (42, 44, 48, 50, 52) der Schallwellen an den Eingangs- und Ausgangsenden der beschichteten Substratdurchlässe mit denen einer Referenzschallwelle der gleichen Frequenz verglichen werden, die in gleicher Weise durch ein Referenzsubstrat hindurchgeleitet wird, von dem bekannt ist, daß es die erforderliche Menge und Gleichförmigkeit der Beschichtung an den Durchlässen und keine Blockierung besitzt, und

h) erfaßt wird, ob die Durchlässe des zu untersuchenden Substrats (22) die vorgeschriebene Gleichförmigkeit der Beschichtung besitzen, aufgrund der Tatsache, daß eine vorgeschriebene Differenz der Phasenwinkel nach Umdrehen der Substratbefestigung eine Abweichung der Gesamtströmungsflächen an den Eingangs- und Ausgangsenden anzeigt und dadurch eine Abweichung von der erforderlichen Gleichförmigkeit der Beschichtung in Längsrichtung der Durchlässe.

4. Akustisches Untersuchungsverfahren nach Anspruch 1 oder 2, dadurch gekennzeichnet, daß, um bei dem Katalysatorwandler-Monolitsubstrat zu bestimmen, ob die Keramikbeschichtung in einer vorbestimmten Menge und gleichmäßig auf die sich hindurcherstreckenden Abgasdurchlässe aufgebracht wurde und ob die Keramikbeschichtung irgendwelche Durchlässe blockiert: nach Schritt b) die Anbringung des Substrats umgekehrt wird, so daß das Eingangsende bei dem Resonatorhohlraum und das Ausgangsende bei dem Lautsprecher ist, dann Schritt b) wiederholt wird, im Schritt c) der Vergleich der Phasenwinkel der Schallwellen am Eingangs- und Ausgangsende der beschichteten Substratdurchlässe mit Bezug auf die einer Referenzschallwelle der gleichen Frequenz durchgeführt wird, die in gleicher Weise durch ein Referenzsubstrat hindurchgeleitet wird, von dem bekannt ist, daß es die erforderliche Quantität und Gleichförmigkeit der Beschichtung an den Durchlässen und keine Blockade besitzt, und beim Schritt d) auch erfaßt wird, ob die Durchlässe des zu untersuchenden Substrats (22) die vorgeschriebene Menge und Gleichförmigkeit der Beschichtung und eine Blockierung aufweisen aufgrund der Tatsache, daß das Auftreten einer vorgeschriebenen Differenz der Phasenwinkel (42, 44, 48, 50, 52) ohne Umkehr der Substratanbringung eine Abweichung der Gesamtströmungsfläche der Durchlässe anzeigt und dadurch eine Abweichung von der erforderlichen Beschichtungsmenge an den Durchlässen und das Fehlen von deren Blockierung, und daß das Auftreten einer vorgeschriebenen Differenz der Phasenwinkel (42, 44, 48, 50, 52) bei Umkehr der Substratanbringung eine Abweichung der Gesamtströmungsflächen an den Eingangs- und Ausgangsenden und dadurch eine Abweichung von der gewünschten Gleichförmigkeit der Beschichtung in Längsrichtung der Durchlässe anzeigt.

Fig.1

Fig.2

EP 0 242 060 B1

Fig.3

Fig.4

Fig.5